(19) Europäisches Patentamt
European Patent Office
Office européen des brevets

(11) **EP 4 769 611 A1**

(12) **EUROPEAN PATENT APPLICATION**
published in accordance with Art. 153(4) EPC

(43) Date of publication:
**01.07.2026 Bulletin 2026/27**

(51) International Patent Classification (IPC):
*H01M 10/0525* (2010.01)   *H01M 10/04* (2006.01)
*H01M 10/42* (2006.01)

(21) Application number: **23959974.9**

(22) Date of filing: **01.12.2023**

(86) International application number:
**PCT/CN2023/135987**

(87) International publication number:
**WO 2025/112068 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited
Ningde City, Fujian Province 352100 (CN)**

(72) Inventors:
• **CHEN, Tengteng
Fujian Province 352100 (CN)**
• **WU, Ke
Fujian Province 352100 (CN)**
• **DENG, Daolin
Fujian Province 352100 (CN)**
• **CHEN, Wen
Fujian Province 352100 (CN)**

(74) Representative: **Kraus & Lederer PartGmbB
Thomas-Wimmer-Ring 15
80539 München (DE)**

(54) **ELECTROCHEMICAL APPARATUS AND ELECTRICAL DEVICE**

(57) An electrochemical apparatus and an electrical device, where the electrochemical apparatus includes a housing, an electrode assembly, and an adhesive component. The housing includes a first sidewall, and the electrode assembly is disposed within the housing and includes a first side surface adjacent to the first sidewall, where the first side surface includes a second region, a first region, and a third region arranged sequentially along a first direction. The adhesive component is located between the housing and the electrode assembly, where the adhesive component includes a first surface and a second surface opposite to each other; the first surface includes a first adhesive zone bonded to the first sidewall; the second surface includes a second adhesive zone bonded to the second region, a third adhesive zone bonded to the third region, and a first non-adhesive zone located between the second adhesive zone and the third adhesive zone. Along a second direction, a projection of the first adhesive zone overlaps with the first non-adhesive zone, where the second direction is a direction in which the first sidewall is opposite to the first side surface. By eliminating bonding of the adhesive component to the first region, the present application helps reduce a risk of damage to the electrode assembly.

FIG. 3

## Description

### TECHNICAL FIELD

The present application relates to the technical field of energy storage, and in particular, to an electrochemical apparatus and an electrical device.

### BACKGROUND

To address issues such as internal short circuits and top seal rupture caused by the movement of internal electrode assemblies in electrochemical apparatuses like lithium-ion batteries during a drop, the electrode assembly inside the electrochemical apparatus is typically bonded to the housing using double-sided adhesive tape to suppress the movement of the electrode assembly. This reduces, to some extent, the risk of failure of the electrochemical apparatus during a drop, thereby improving the use safety of the electrochemical apparatus.

### SUMMARY

However, the inventors of the present application have found through research that the existing structure, which uses double-sided adhesive tape to bond and fix the electrode assembly to the housing, although can suppress the movement of the electrode assembly during a drop of the electrochemical apparatus, but poses a risk of causing an internal short circuit by easily tearing the foil material on the outer periphery of the electrode assembly.

In view of this, the present application provides an electrochemical apparatus aimed at reducing the risk of tearing the electrode plates on the outer periphery of the electrode assembly during a drop, thereby improving the safety of the electrochemical apparatus.

According to a first aspect of the present application, an electrochemical apparatus is provided, where the electrochemical apparatus includes a housing, an electrode assembly, and an adhesive component. The housing includes a first sidewall. The electrode assembly is disposed within the housing, where the electrode assembly includes a first side surface adjacent to the first sidewall, the first side surface including a first region, a second region, and a third region. Along a first direction, the first region is located between the second region and the third region. The adhesive component is located between the housing and the electrode assembly, where the adhesive component includes a first surface and a second surface opposite to each other, the first surface being adjacent to the housing, and the second surface facing away from the housing. The first surface includes a first adhesive zone bonded to the first sidewall; and the second surface includes a second adhesive zone bonded to the second region, a third adhesive zone bonded to the third region, and a first non-adhesive zone located between the second adhesive zone and the third adhesive zone. Along a second direction, a projection of the first adhesive zone overlaps with the first non-adhesive zone, where the second direction is a direction in which the first sidewall is opposite to the first side surface.

In the present application, by providing the adhesive component between the electrode assembly and the housing and eliminating bonding of the adhesive component to the first region, the electrode assembly is bonded to the adhesive component through the second region and the third region. This suppresses movement of the electrode assembly when the electrochemical apparatus is subjected to an impact, while allowing the pulling force of the housing to be buffered through the first non-adhesive zone and then transmitted to the electrode assembly through the second adhesive zone and the third adhesive zone, thereby helping reduce the risk of tearing the electrode plates on the outer periphery of the electrode assembly when the electrochemical apparatus is subjected to an impact.

In any optional embodiments, the first surface further includes a second non-adhesive zone and a third non-adhesive zone, where, along the first direction, the first adhesive zone is located between the second non-adhesive zone and the third non-adhesive zone; along the second direction, a projection of the second non-adhesive zone overlaps with the second adhesive zone, and a projection of the third non-adhesive zone overlaps with the third adhesive zone. This configuration enables better buffering of the pulling force transmitted by the housing when the electrochemical apparatus is subjected to an impact, reducing the pulling force exerted by the adhesive component on the second region and the third region of the electrode assembly, thereby reducing the risk of tearing the electrode plates on the outer periphery of the electrode assembly.

In any optional embodiments, the adhesive component includes a first single-sided adhesive, a second single-sided adhesive, and a third single-sided adhesive, where the first single-sided adhesive includes a first adhesive surface and a first non-adhesive surface opposite to each other, the first adhesive surface including a fourth adhesive zone, a fifth adhesive zone, and the first adhesive zone located between the fourth adhesive zone and the fifth adhesive zone. The second single-sided adhesive includes a second adhesive surface and a second non-adhesive surface opposite to each other, where the second adhesive surface is bonded to the fourth adhesive zone and the second region. The third single-sided adhesive includes a third adhesive surface and a third non-adhesive surface opposite to each other, where the third adhesive surface is bonded to the fifth adhesive zone and the third region. Thus, bonding of the first single-sided adhesive, the second single-sided adhesive, and the third single-sided adhesive to each other enables the adhesive component to form the first adhesive zone, the second adhesive zone, the third adhesive zone, the first non-adhesive zone, the second non-adhesive zone, and the third non-adhesive zone, offering the advantages of simple operation, high efficiency, and low cost. Additionally, the bonding segment of the second single-sided adhesive with the fourth adhesive zone of the first single-sided adhesive and the bonding segment of the third single-sided adhesive with the fifth adhesive zone of the first single-sided adhesive can further buffer the pulling force of the housing through deformation, thereby further reducing the risk of tearing the electrode plates on the outer periphery of the electrode assembly.

In any optional embodiments, the adhesive component includes a first double-sided adhesive, a fourth single-sided adhesive, a fifth single-sided adhesive, and a sixth single-sided adhesive. The first double-sided adhesive includes a seventh adhesive surface and an eighth adhesive surface opposite to each other; the seventh adhesive surface includes a sixth adhesive zone, a seventh adhesive zone, and the first adhesive zone located between the sixth adhesive zone and the seventh adhesive zone; and the eighth adhesive surface includes the second adhesive zone, the third adhesive zone, and an eighth adhesive zone located between the second adhesive zone and the third adhesive zone. The fourth single-sided adhesive includes a fourth adhesive surface and a fourth non-adhesive surface opposite to each other, where the fourth adhesive surface is bonded to the sixth adhesive zone; the fifth single-sided adhesive includes a fifth adhesive surface and a fifth non-adhesive surface opposite to each other, where the fifth adhesive surface is bonded to the seventh adhesive zone; and the sixth single-sided adhesive includes a sixth adhesive surface and a sixth non-adhesive surface opposite to each other, where the sixth adhesive surface is bonded to the eighth adhesive zone. This configuration provides a method for forming adhesive zones and non-adhesive zones that is simple to operate, highly efficient, and cost-effective. Additionally, by adjusting the size and position of the fourth single-sided adhesive, the fifth single-sided adhesive, and the sixth single-sided adhesive, the relative sizes of the first adhesive zone, the second adhesive zone, the third adhesive zone, the first non-adhesive zone, the second non-adhesive zone, and the third non-adhesive zone can be conveniently controlled, thereby facilitating adjustment of the bonding strength between the housing and the electrode assembly as well as the buffering capacity of the adhesive component.

In any optional embodiments, the first single-sided adhesive includes a first adhesive body and a second adhesive body arranged separately, where the second single-sided adhesive is bonded to the first adhesive body, and the third single-sided adhesive is bonded to the second adhesive body.

In any optional embodiments, the second single-sided adhesive includes a third adhesive body and a fourth adhesive body arranged separately, where the third adhesive body and the fourth adhesive body are arranged along a third direction, any two of the third direction, the first direction and the second direction are perpendicular to each other.

In any optional embodiments, the third single-sided adhesive includes a fifth adhesive body and a sixth adhesive body arranged separately, where the fifth adhesive body and the sixth adhesive body are arranged along a third direction, any two of the third direction, the first direction and the second direction are perpendicular to each other.

In any optional embodiments, the electrode assembly further includes a second side surface, a third side surface, and a fourth side surface, where the second side surface is disposed opposite to the first side surface along the second direction, and the third side surface is disposed opposite to the fourth side surface along the first direction.

In any optional embodiments, the second single-sided adhesive is bonded to both the second region and the third side surface.

In any optional embodiments, the third single-sided adhesive is bonded to both the third region and the fourth side surface.

In any optional embodiments, the eighth adhesive surface further includes a ninth adhesive zone, where the second adhesive zone is located between the ninth adhesive zone and the eighth adhesive zone, and the ninth adhesive zone is bonded to the third side surface.

In any optional embodiments, the eighth adhesive surface further includes a tenth adhesive zone, where the third adhesive zone is located between the tenth adhesive zone and the eighth adhesive zone, and the tenth adhesive zone is bonded to the fourth side surface.

The above configurations enable the adhesive component to transmit the pulling force of the housing to the third side surface or the fourth side surface of the electrode assembly, helping reduce the risk of tearing the electrode plates on the outer periphery of the electrode assembly when the electrochemical apparatus is subjected to an impact.

In any optional embodiments, the second single-sided adhesive is further bonded to the second side surface.

In any optional embodiments, the third single-sided adhesive is further bonded to the second side surface.

In any optional embodiments, the ninth adhesive zone is further bonded to the second side surface.

In any optional embodiments, the tenth adhesive zone is further bonded to the second side surface.

The above configurations increase the bonding area between the adhesive component and the electrode assembly, thereby helping enhance the strength of the connection between the housing and the electrode assembly. Additionally, they can reduce the pulling force of the housing on the electrode assembly, helping reduce the risk of tearing the electrode plates on the outer periphery of the electrode assembly when the electrochemical apparatus is subjected to an impact.

In any optional embodiments, along the second direction, the first non-adhesive zone covers the projection of the first adhesive zone, the projection of the second non-adhesive zone covers the second adhesive zone, and the projection of the third non-adhesive zone covers the third adhesive zone. This configuration ensures that the adhesive component has no portion bonded to both the housing and the electrode assembly on two surfaces, helping better buffer the pulling force of the housing on the electrode assembly, thereby reducing the risk of tearing the electrode plates on the outer periphery of the electrode assembly.

In any optional embodiments, along the second direction, the projection of the first adhesive zone covers the first non-adhesive zone. Further, in some embodiments, along the second direction, the projection of the first adhesive zone covers the first non-adhesive zone, the second adhesive zone, and the third adhesive zone.

In any optional embodiments, the adhesive component includes a first single-sided adhesive, a second double-sided adhesive, and a third double-sided adhesive, where the first single-sided adhesive includes a first adhesive surface and a first non-adhesive surface opposite to each other, the first adhesive surface including a fourth adhesive zone, a fifth adhesive zone, and an eleventh adhesive zone located between the fourth adhesive zone and the fifth adhesive zone. The second double-sided adhesive includes a ninth adhesive surface and a tenth adhesive surface opposite to each other, where the ninth adhesive surface is bonded to the fourth adhesive zone and the second region, and the tenth adhesive surface is bonded to the first sidewall. The third double-sided adhesive includes an eleventh adhesive surface and a twelfth adhesive surface opposite to each other, where the eleventh adhesive surface is bonded to the fifth adhesive zone and the third region, and the twelfth adhesive surface is bonded to the first sidewall. This configuration helps ensure that the entire first surface of the adhesive component is bonded to the first sidewall of the housing, thereby helping enhance the strength of the connection between the adhesive component and the housing.

In any optional embodiments, the adhesive component includes a first double-sided adhesive and a sixth single-sided adhesive. The first double-sided adhesive includes a seventh adhesive surface and an eighth adhesive surface opposite to each other; the seventh adhesive surface is bonded to the first sidewall; the eighth adhesive surface includes the second adhesive zone, the third adhesive zone, and an eighth adhesive zone located between the second adhesive zone and the third adhesive zone. The sixth single-sided adhesive includes a sixth adhesive surface and a sixth non-adhesive surface opposite to each other, where the sixth adhesive surface is bonded to the eighth adhesive zone. This configuration, while ensuring that the entire first surface of the adhesive component is bonded to the first sidewall of the housing, further reduces the amount of adhesive used, helping improve manufacturing efficiency.

In any optional embodiments, the first single-sided adhesive includes a first adhesive body and a second adhesive body arranged separately, where the second double-sided adhesive is bonded to the first adhesive body, and the third double-sided adhesive is bonded to the second adhesive body.

In any optional embodiments, the second double-sided adhesive includes a third adhesive body and a fourth adhesive body arranged separately, where the third adhesive body and the fourth adhesive body are arranged along a third direction, any two of the third direction, the first direction and the second direction are perpendicular to each other.

In any optional embodiments, the third double-sided adhesive includes a fifth adhesive body and a sixth adhesive body arranged separately, where the fifth adhesive body and the sixth adhesive body are arranged along a third direction, any two of the third direction, the first direction and the second direction are perpendicular to each other.

In any optional embodiments, along the first direction, a width of the electrode assembly is W, and along the third direction, a length of the electrode assembly is L, where any two of the third direction, the first direction and the second direction are perpendicular to each other.

In any optional embodiments, along the first direction, a distance between a center of the first adhesive zone and a center of the first side surface is $D_1$, satisfying: $D_1 \leq 0.1W$. This configuration helps promote more uniform pulling of the electrode assembly by the housing, reducing the risk of damage to the electrode plates on the outer periphery of the electrode assembly.

In any optional embodiments, along the third direction, a distance between a center of the first adhesive zone and a center of the first side surface is $D_2$, satisfying: $D_2 \leq 0.1L$. This configuration helps promote more uniform pulling of the electrode assembly by the housing, reducing the risk of damage to the electrode plates on the outer periphery of the electrode assembly.

In any optional embodiments, along the first direction, a width of the first adhesive zone is $S_1$, satisfying: $0.1W \leq S_1 \leq 0.85W$. This configuration helps reduce the risk of movement of the electrode assembly.

In any optional embodiments, along the third direction, a length of the first adhesive zone is $L_1$, satisfying: $0.3L \leq L_1 \leq 0.9L$. This configuration helps reduce the risk of movement of the electrode assembly.

In any optional embodiments, along the first direction, a width of the first non-adhesive zone is $W_1$, satisfying: $0.3W \leq W_1 \leq 0.85W$. This configuration helps better buffer the pulling force of the housing on the electrode assembly, reducing the risk of damage to the electrode plates on the outer periphery of the electrode assembly.

In any optional embodiments, along the third direction, a length of the first non-adhesive zone is $l_1$, satisfying: $0.3L \leq l_1 \leq 0.9L$.

In any optional embodiments, along the first direction, a width of bonding between the second adhesive zone and the second region is $H_1$, satisfying $H_1 \geq 0.05W$. This configuration helps reduce the risk of movement of the electrode assembly. In any optional embodiments, $H_1 \leq 0.3W$.

In any optional embodiments, along the first direction, a distance between the second adhesive zone and the first adhesive zone is $H_2$, satisfying $H_2 \geq 0.05W_1$. This configuration helps better buffer the pulling force of the housing on the electrode assembly, reducing the risk of damage to the electrode plates on the outer periphery of the electrode assembly. In any optional embodiments, $H_2 \leq 0.4W_1$.

In any optional embodiments, along the first direction, a distance between the third adhesive zone and the first adhesive zone is $H_3$, satisfying $H_3 \geq 0.05W_1$. This configuration helps better buffer the pulling force of the housing on the electrode assembly, reducing the risk of damage to the electrode plates on the outer periphery of the electrode assembly. In any optional embodiments, $H_3 \leq 0.4W_1$.

In any optional embodiments, along the first direction, a width of bonding between the third adhesive zone and the third region is $H_4$, satisfying $H_4 \geq 0.05W$. This configuration helps reduce the risk of movement of the electrode assembly. In any optional embodiments, $H_4 \leq 0.3W$.

In any optional embodiments, along the third direction, a length of the second adhesive zone is $L_2$, satisfying $L_2 \geq 0.4L_1$. This configuration helps reduce the risk of movement of the electrode assembly.

In any optional embodiments, along the third direction, a length of the third adhesive zone is $L_3$, satisfying $L_3 \geq 0.4L_1$. This configuration helps reduce the risk of movement of the electrode assembly.

According to a second aspect of the present application, an electrical device is provided, including the electrochemical apparatus according to any of the above embodiments. In the drop test, the electrochemical apparatus exhibits reduced risks of electrode assembly movement and electrode plate tearing, thereby improving the use safety of the electrical device.

## BRIEF DESCRIPTION OF DRAWINGS

FIG. 1 is a schematic structural diagram of an electrochemical apparatus according to an embodiment of the present application.

FIG. 2 is an exploded schematic diagram of the electrochemical apparatus in FIG. 1.

FIG. 3 is a cross-sectional view of an electrochemical apparatus according to an embodiment of the present application.

FIG. 4 is an exploded schematic diagram of an adhesive component according to an embodiment of the present application.

FIG. 5 is an exploded schematic diagram of an adhesive component according to another embodiment of the present application.

FIG. 6 is a cross-sectional view of an adhesive component and an electrode assembly according to an embodiment of the present application.

FIG. 7 is a cross-sectional view of an adhesive component and an electrode assembly according to another embodiment of the present application.

FIG. 8 is a cross-sectional view of an adhesive component and an electrode assembly according to still another embodiment of the present application.

FIG. 9 is a cross-sectional view of an adhesive component and an electrode assembly according to yet still another embodiment of the present application.

FIG. 10 is a cross-sectional view of an adhesive component and an electrode assembly according to yet still another embodiment of the present application.

FIG. 11 is an exploded schematic diagram of an adhesive component according to still another embodiment of the present application.

FIG. 12 is a schematic diagram of a first single-sided adhesive arranged separately according to an embodiment of the present application.

FIG. 13 is a schematic diagram of a second single-sided adhesive and a third single-sided adhesive arranged separately according to an embodiment of the present application.

FIG. 14 is a top view of an adhesive component and an electrode assembly according to an embodiment of the present application.

FIG. 15 is a top view of an adhesive component and an electrode assembly according to another embodiment of the present application.

FIG. 16 is a schematic diagram of an electrical device according to an embodiment of the present application.

Description of reference signs of main components:

| | |
|---|---|
| electrochemical apparatus | 100 |
| housing | 10 |
| first sidewall | 11 |
| second sidewall | 12 |
| third sidewall | 13 |
| fourth sidewall | 14 |
| fifth sidewall | 15 |
| sixth sidewall | 16 |
| electrode assembly | 20 |
| first side surface | 21 |
| first region | 211 |
| second region | 212 |
| third region | 213 |
| second side surface | 22 |
| third side surface | 23 |
| fourth side surface | 24 |
| fifth side surface | 25 |
| sixth side surface | 26 |
| adhesive component | 30 |
| first surface | 31 |
| first adhesive zone | 311 |
| second non-adhesive zone | 312 |
| third non-adhesive zone | 313 |
| second surface | 32 |
| first non-adhesive zone | 321 |
| second adhesive zone | 322 |
| third adhesive zone | 323 |
| first single-sided adhesive | 33 |
| first adhesive surface | 331 |
| fourth adhesive zone | 3311 |
| fifth adhesive zone | 3312 |
| eleventh adhesive zone | 3313 |
| first non-adhesive surface | 332 |
| first adhesive body | 33a |
| second adhesive body | 33b |
| second single-sided adhesive | 34 |
| second adhesive surface | 341 |
| second non-adhesive surface | 342 |
| third adhesive body | 34a |
| fourth adhesive body | 34b |
| third single-sided adhesive | 35 |
| third adhesive surface | 351 |
| third non-adhesive surface | 352 |
| fifth adhesive body | 35a |
| sixth adhesive body | 35b |
| first double-sided adhesive | 36 |
| seventh adhesive surface | 361 |
| sixth adhesive zone | 3611 |
| seventh adhesive zone | 3612 |
| eighth adhesive surface | 362 |
| eighth adhesive zone | 3621 |

(continued)

| | |
|---|---|
| ninth adhesive zone | 3622 |
| tenth adhesive zone | 3623 |
| fourth single-sided adhesive | 37 |
| fourth adhesive surface | 371 |
| fourth non-adhesive surface | 372 |
| fifth single-sided adhesive | 38 |
| fifth adhesive surface | 381 |
| fifth non-adhesive surface | 382 |
| sixth single-sided adhesive | 39 |
| sixth adhesive surface | 391 |
| sixth non-adhesive surface | 392 |
| second double-sided adhesive | 41 |
| ninth adhesive surface | 411 |
| tenth adhesive surface | 412 |
| third double-sided adhesive | 42 |
| eleventh adhesive surface | 421 |
| twelfth adhesive surface | 422 |
| tab | 50 |
| device body | 200 |
| electrical device | 1000 |
| first direction | X |
| second direction | Y |
| third direction | Z |

## DETAILED DESCRIPTION

The following describes the technical solutions in some embodiments of the present application. It is apparent that the described embodiments are only some embodiments of the present application, rather than all embodiments.

It should be noted that, in the present application, a center of a region refers to a centroid of a planar shape of the region when the region is a continuous whole. It can be understood that the centroid of the planar shape can be determined by a suspension method: suspend the planar shape with a thin string, draw a vertical line from a starting point of the string, suspend the planar shape again from a different endpoint, draw another vertical line in the same manner, and take an intersection of the two lines as the centroid of the planar shape. When the region consists of multiple discrete regions, the center of the region is a center of a smallest circumscribed circle encompassing the multiple discrete regions. It can be understood that the smallest circumscribed circle is a circle that encompasses the multiple discrete regions with a smallest radius.

It can be understood that when a component is considered to be "connected" to another component, it may be directly connected to the another component, or an intermediate component may exist simultaneously. When a component is considered to be "disposed on" another component, it may be directly disposed on the another component, or an intermediate component may exist simultaneously. The terms "top," "bottom," and similar expressions used herein are for illustrative purposes only.

The terms "first," "second," and the like are used only to distinguish different objects and should not be construed as indicating or implying relative importance, or implying a number, specific order, or primary-secondary relationship of the indicated technical features.

The term "perpendicular" is used to describe an ideal state between two parts. In actual production or use, an approximation of this perpendicular state can exist between two parts. The two described as "perpendicular" may not be absolutely straight lines or planes but may be roughly straight lines or planes; from a macroscopic perspective, as long as an overall extension direction is a straight line or plane, the parts can be considered "straight lines" or "planes."

It should be recognized that the dimensions and thicknesses of the components shown in the drawings are for better understanding and easier description, and the present application is not limited to the dimensions and thicknesses shown in the drawings.

Unless otherwise defined, all technical and scientific terms used herein have the same meanings as commonly understood by those skilled in the technical field of the present application. The terms used in the specification of the present application herein are for the purpose of describing specific embodiments only and are not intended to limit the present application.

Some embodiments of the present application are described below with reference to the accompanying drawings. In the absence of conflict, the following embodiments and features in some embodiments can be combined with each other.

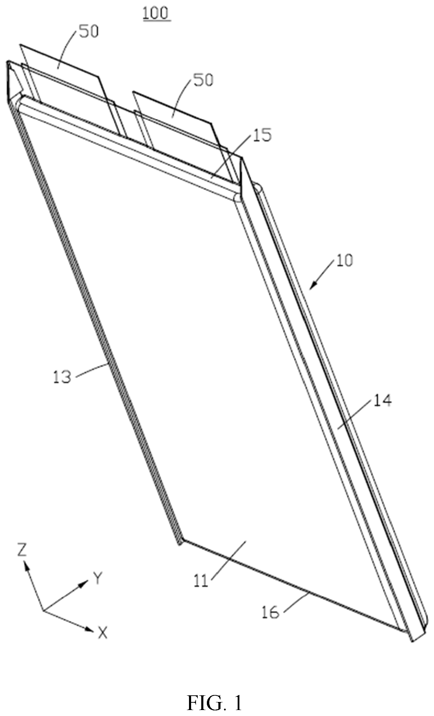

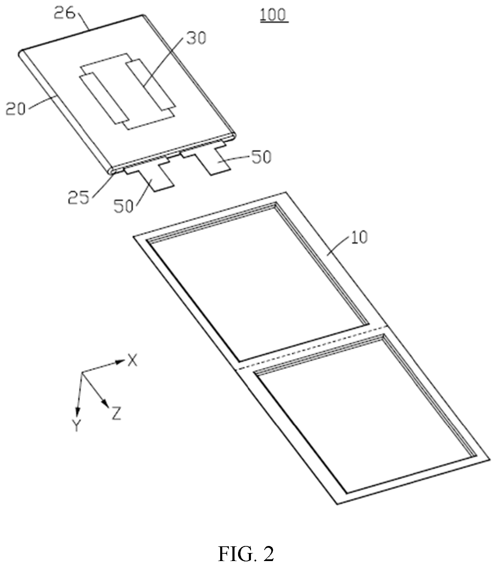

Referring to FIG. 1 and FIG. 2, an embodiment of the present application provides an electrochemical apparatus 100, where the electrochemical apparatus 100 includes a housing 10, an electrode assembly 20, and an adhesive component 30. The electrode assembly 20 is disposed within the housing 10, the adhesive component 30 is disposed within the housing 10, and the adhesive component 30 is located between the housing 10 and the electrode assembly 20, where the adhesive component 30 bonds the housing 10 and the electrode assembly 20.

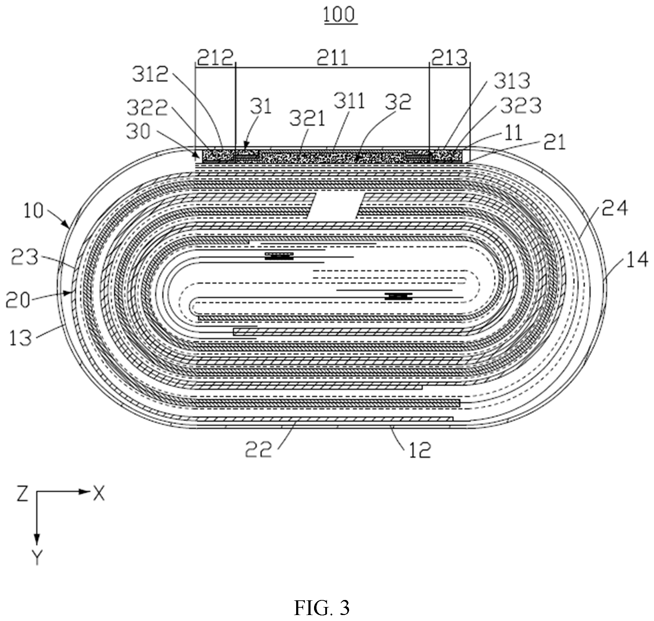

In some embodiments, referring to FIG. 3, the housing 10 includes a first sidewall 11 and a second sidewall 12 disposed opposite to each other, where the electrode assembly 20 is located between the first sidewall 11 and the second sidewall 12.

In some embodiments, referring to FIG. 1 and FIG. 3, the housing 10 further includes a third sidewall 13, a fourth sidewall 14, a fifth sidewall 15, and a sixth sidewall 16, where the third sidewall 13 and the fourth sidewall 14 are disposed opposite to each other along a first direction X, the first sidewall 11 and the second sidewall 12 are disposed opposite to each other along a second direction Y, the fifth sidewall 15 and the sixth sidewall 16 are disposed opposite to each other along a third direction Z, and any two of the first direction X, the second direction Y, and the third direction Z are perpendicular to each other. The first sidewall 11, the second sidewall 12, the third sidewall 13, the fourth sidewall 14, the fifth sidewall 15, and the sixth sidewall 16 collectively form a space for accommodating the electrode assembly 20.

In some embodiments, the housing 10 is an aluminum-plastic film, but the housing 10 is not limited to an aluminum-plastic film.

In some embodiments, the electrode assembly 20 includes a positive electrode plate, a negative electrode plate, and a separator, where the positive electrode plate, the negative electrode plate, and the separator may be stacked to form a laminated structure, or the positive electrode plate, the negative electrode plate, and the separator may be stacked and wound to form a wound structure.

In some embodiments, the positive electrode plate includes a positive electrode current collector and a positive electrode active material layer disposed on the positive electrode current collector; and the negative electrode plate includes a negative electrode current collector and a negative electrode active material layer disposed on the negative electrode current collector.

In some embodiments, a portion of the positive electrode current collector is provided with the positive electrode active material layer, and a portion of the positive electrode current collector is not provided with the positive electrode active material layer; and a portion of the negative electrode current collector is provided with the negative electrode active material layer, and a portion of the negative electrode current collector is not provided with the negative electrode active material layer.

The positive electrode current collector and the negative electrode current collector may be metal layers. As an illustrative example, the positive electrode current collector may be a metal layer including at least one of aluminum, nickel, tantalum, or titanium, such as aluminum foil. The positive electrode active material layer includes a positive electrode active material, where the positive electrode active material may include at least one of lithium cobalt oxide, lithium nickel cobalt manganese oxide, lithium nickel cobalt aluminum oxide, lithium iron phosphate, lithium manganese iron phosphate, or lithium manganese oxide. The negative electrode current collector may be a metal layer including at least one of copper, nickel, tantalum, or titanium, such as copper foil. The negative electrode active material layer includes a negative electrode active material, where the negative electrode active material may include at least one of graphite, hard carbon, soft carbon, silicon, silicon-oxygen material, or silicon-carbon material.

In some embodiments, an outermost periphery of the electrode assembly 20 has a positive electrode current collector layer not provided with the positive electrode active material layer, where the positive electrode current collector is aluminum foil.

In some embodiments, referring to FIG. 3, the electrode assembly 20 includes a first side surface 21 adjacent to the first sidewall 11, where the first side surface 21 includes a first region 211, a second region 212, and a third region 213, and along the first direction X, the first region 211 is located between the second region 212 and the third region 213.

In some embodiments, referring to FIG. 3, the electrode assembly 20 further includes a second side surface 22, a third side surface 23, and a fourth side surface 24, where, along the second direction Y, the first side surface 21 is disposed opposite to the second side surface 22, the first side surface 21 is closer to the first sidewall 11 than the second side surface 22, the first side surface 21 is also disposed opposite to the first sidewall 11, and the second side surface 22 faces away from the first sidewall 11. The third side surface 23 and the fourth side surface 24 are disposed opposite to each other along the first direction X, and when the electrode assembly 20 is a wound structure, the third side surface 23 and the fourth side surface 24 are arc-shaped side surfaces.

In some embodiments, referring to FIG. 2, the electrode assembly 20 further includes a fifth side surface 25 and a sixth side surface 26, where the fifth side surface 25 and the sixth side surface 26 are disposed opposite to each other along the third direction Z.

In some embodiments, referring to FIG. 1 and FIG. 2, the electrochemical apparatus 100 further includes a tab 50, where the tab 50 is connected to the electrode assembly 20, and along the third direction Z, the tab 50 extends out of the housing 10 from the fifth side surface 25 or the sixth side surface 26 of the electrode assembly 20 to lead out a polarity of the electrode assembly 20. When the tab 50 is connected to a positive electrode plate of the electrode assembly 20, the tab 50 is a positive electrode tab 50; and when the tab 50 is connected to a negative electrode plate of the electrode assembly 20, the tab 50 is a negative electrode tab 50. The tab 50 may be made of metallic copper or metallic aluminum, without specific limitation herein.

In some embodiments, referring to FIG. 3, the adhesive component 30 includes a first surface 31 and a second surface 32 disposed opposite to each other, where the first surface 31 is closer to the housing 10 than the second surface 32, and the second surface 32 faces away from the housing 10. The first surface 31 includes a first adhesive zone 311 bonded to the first sidewall 11, and the second surface 32 includes a second adhesive zone 322 bonded to the second region 212, a third adhesive zone 323 bonded to the third region 213, and a first non-adhesive zone 321 located between the second adhesive zone 322 and the third adhesive zone 323. Along the second direction Y, a projection of the first adhesive zone 311 overlaps with the first non-adhesive zone 321. The second direction Y is a direction in which the first sidewall 11 is opposite to the first side surface 21.

In the present application, by providing the adhesive component 30 between the electrode assembly 20 and the housing 10 and eliminating bonding of the adhesive component 30 to the first region 211, the electrode assembly 20 is bonded to the adhesive component 30 through the second region 212 and the third region 213. This suppresses movement of the electrode assembly 20 when the electrochemical apparatus 100 is subjected to an impact, while allowing a pulling force of the housing 10 to be buffered through the first non-adhesive zone 321 and then transmitted to the electrode assembly 20 through the second adhesive zone 322 and the third adhesive zone 323, thereby helping reduce the risk of tearing the electrode plates on the outer periphery of the electrode assembly 20 when the electrochemical apparatus 100 is subjected to an impact.

In some embodiments, referring to FIG. 3, the first surface 31 further includes a second non-adhesive zone 312 and a third non-adhesive zone 313, where, along the first direction X, the first adhesive zone 311 is located between the second non-adhesive zone 312 and the third non-adhesive zone 313. Along the second direction Y, a projection of the second non-adhesive zone 312 overlaps with the second adhesive zone 322, and a projection of the third non-adhesive zone 313 overlaps with the third adhesive zone 323. This configuration enables better buffering of a pulling force transmitted by the housing 10 when the electrochemical apparatus 100 is subjected to an impact, reducing the pulling force exerted by the adhesive component 30 on the second region 212 and the third region 213 of the electrode assembly 20, thereby reducing the risk of tearing the electrode plates on the outer periphery of the electrode assembly 20.

In some embodiments, along the second direction Y, the first non-adhesive zone 321 covers the projection of the first adhesive zone 311, the projection of the second non-adhesive zone 312 covers the second adhesive zone 322, and the projection of the third non-adhesive zone 313 covers the third adhesive zone 323. This configuration ensures that the adhesive component 30 has no portion bonded to both the housing 10 and the electrode assembly 20 on two surfaces, helping better buffer the pulling force of the housing 10 on the electrode assembly 20, thereby reducing the risk of tearing the electrode plates on the outer periphery of the electrode assembly 20.

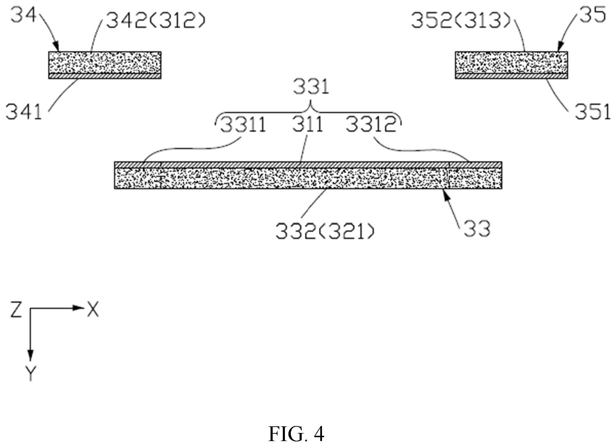

In some embodiments, referring to FIG. 3 and FIG. 4, the adhesive component 30 includes a first single-sided adhesive 33, a second single-sided adhesive 34, and a third single-sided adhesive 35, where the first single-sided adhesive 33 includes a first adhesive surface 331 and a first non-adhesive surface 332 opposite to each other, and the first adhesive surface 331 includes a fourth adhesive zone 3311, a fifth adhesive zone 3312, and the first adhesive zone 311 located between the fourth adhesive zone 3311 and the fifth adhesive zone 3312. The second single-sided adhesive 34 includes a second adhesive surface 341 and a second non-adhesive surface 342 opposite to each other, where the second adhesive surface 341 is bonded to the fourth adhesive zone 3311 and the second region 212. The third single-sided adhesive 35 includes a third adhesive surface 351 and a third non-adhesive surface 352 opposite to each other, where the third adhesive surface 351 is bonded to the fifth adhesive zone 3312 and the third region 213.

It can be understood that the first non-adhesive surface 332 of the first single-sided adhesive 33 forms the first non-adhesive zone 321; the second non-adhesive surface of the second single-sided adhesive 34 forms the second non-adhesive zone 312; and the third non-adhesive surface 352 of the third single-sided adhesive 35 forms the third non-adhesive zone 313. Bonding of the first single-sided adhesive 33, the second single-sided adhesive 34, and the third single-sided adhesive 35 to each other enables the adhesive component 30 to form the first adhesive zone 311, the second adhesive zone 322, the third adhesive zone 323, the first non-adhesive zone 321, the second non-adhesive zone 312, and the third non-adhesive zone 313, offering the advantages of simple operation, high efficiency, and low cost. Additionally, a bonding segment of the second single-sided adhesive 34 with the fourth adhesive zone 3311 of the first single-sided adhesive 33 and a bonding segment of the third single-sided adhesive 35 with the fifth adhesive zone 3312 of the first single-sided adhesive 33 can further buffer a pulling force of the housing 10 through deformation, thereby further reducing the risk of tearing the electrode plates on the outer periphery of the electrode assembly 20.

In some embodiments, referring to FIG. 3 and FIG. 4, along the second direction Y, a projection of the second non-adhesive zone 312 overlaps with the first non-adhesive zone 321, and a projection of the third non-adhesive zone 313 overlaps with the first non-adhesive zone 321. An overlapping region of the projection of the second non-adhesive zone 312 with the first non-adhesive zone 321 and an overlapping region of the projection of the third non-adhesive zone 313 with the first non-adhesive zone 321 are portions of the adhesive component 30 that are non-adhesive on two surfaces. This configuration allows a pulling force of the housing 10 to be dissipated through deformation of the portions that are non-adhesive on two surfaces during transmission to the electrode assembly 20, reducing the pulling force transmitted by the adhesive component 30 to the second region 212 and the third region 213, thereby helping reduce the risk of tearing the electrode plates on the outer periphery of the electrode assembly 20.

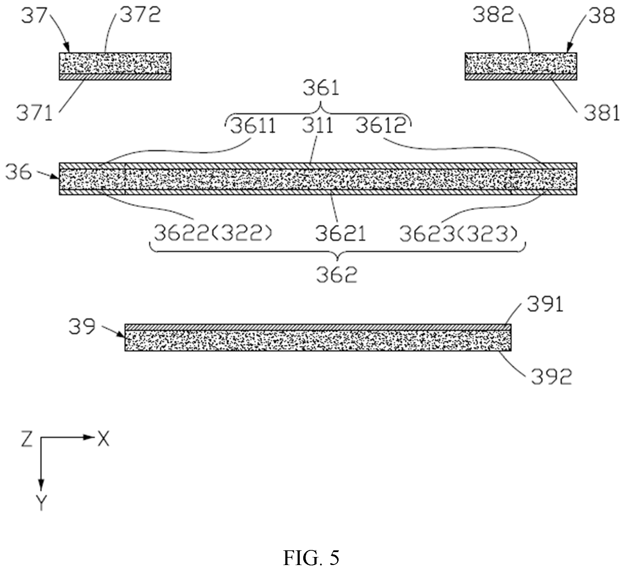

In some embodiments, referring to FIG. 3 and FIG. 5, the adhesive component 30 includes a first double-sided adhesive 36, a fourth single-sided adhesive 37, a fifth single-sided adhesive 38, and a sixth single-sided adhesive 39. The first double-sided adhesive 36 includes a seventh adhesive surface 361 and an eighth adhesive surface 362 opposite to each other. The seventh adhesive surface 361 includes a sixth adhesive zone 3611, a seventh adhesive zone 3612, and the first adhesive zone 311 located between the sixth adhesive zone 3611 and the seventh adhesive zone 3612. The eighth adhesive surface 362 includes the second adhesive zone 322, the third adhesive zone 323, and an eighth adhesive zone 3621 located between the second adhesive zone 322 and the third adhesive zone 323. The fourth single-sided adhesive 37 includes a fourth adhesive surface 371 and a fourth non-adhesive surface 372 opposite to each other, where the fourth adhesive surface 371 is bonded to the sixth adhesive zone 3611. The fifth single-sided adhesive 38 includes a fifth adhesive surface 381 and a fifth non-adhesive surface 382 opposite to each other, where the fifth adhesive surface 381 is bonded to the seventh adhesive zone 3612. The sixth single-sided adhesive 39 includes a sixth adhesive surface 391 and a sixth non-adhesive surface 392 opposite to each other, where the sixth adhesive surface 391 is bonded to the eighth adhesive zone 3621.

It can be understood that by providing the first double-sided adhesive 36 and the fourth single-sided adhesive 37, the fifth single-sided adhesive 38, and the sixth single-sided adhesive 39 bonded to the first double-sided adhesive 36, the adhesive component 30 can form the first adhesive zone 311, the second adhesive zone 322, the third adhesive zone 323, the first non-adhesive zone 321, the second non-adhesive zone 312, and the third non-adhesive zone 313, providing a method for forming adhesive zones and non-adhesive zones that is simple to operate, highly efficient, and cost-effective. Additionally, by adjusting the size and position of the fourth single-sided adhesive 37, the fifth single-sided adhesive 38, and the sixth single-sided adhesive 39, the relative sizes of each adhesive zone and non-adhesive zone can be conveniently controlled, thereby facilitating adjustment of the bonding strength between the housing 10 and the electrode assembly 20 as well as the buffering capacity of the adhesive component 30.

In some embodiments, referring to FIG. 5, along the second direction Y, a projection of the fourth single-sided adhesive 37 overlaps with the sixth single-sided adhesive 39, and a projection of the fifth single-sided adhesive 38 overlaps with the sixth single-sided adhesive 39. An overlapping region of the projection of the fourth single-sided adhesive 37 with the sixth single-sided adhesive 39 and an overlapping region of the fifth single-sided adhesive 38 with the sixth single-sided adhesive 39 are portions of the adhesive component 30 that are non-adhesive on two surfaces. This configuration allows a pulling force of the housing 10 to be dissipated through deformation of the portions that are non-adhesive on two surfaces during transmission to the electrode assembly 20, reducing the pulling force transmitted by the adhesive component 30 to the second region 212 and the third region 213, thereby helping reduce the risk of tearing the electrode plates on the outer periphery of the electrode assembly 20.

In some other embodiments, along the second direction Y, a projection of the fourth single-sided adhesive 37 does not overlap with the sixth single-sided adhesive 39, and a projection of the fifth single-sided adhesive 38 does not overlap with the sixth single-sided adhesive 39. Thus, the adhesive component 30 may have portions that are adhesive on two surfaces. For example, along the second direction Y, the projection of the fourth single-sided adhesive 37 or the fifth single-sided adhesive 38 is separated from the sixth single-sided adhesive 39. Alternatively, there may be no regions that are adhesive on two surfaces. For example, along the second direction Y, the projection of the fourth single-sided adhesive 37 and the projection of the fifth single-sided adhesive 38 are respectively in contact with the sixth single-sided adhesive 39.

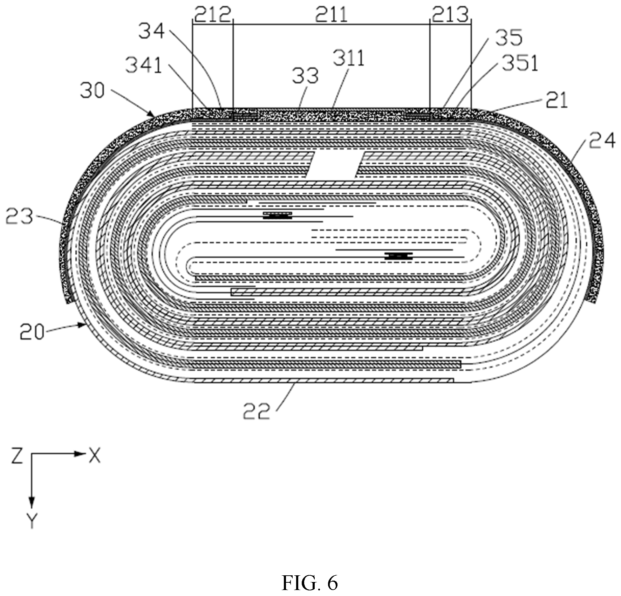

In some embodiments, referring to FIG. 6, the second adhesive surface 341 of the second single-sided adhesive 34 is bonded to both the second region 212 and the third side surface 23. This configuration enables the adhesive component 30 to transmit a pulling force of the housing 10 to the third side surface 23 of the electrode assembly 20, helping reduce the risk of tearing the electrode plates on the outer periphery of the electrode assembly 20.

In some embodiments, referring to FIG. 6, the third adhesive surface 351 of the third single-sided adhesive 35 is bonded to both the third region 213 and the fourth side surface 24. This configuration enables the adhesive component 30 to transmit a pulling force of the housing 10 to the fourth side surface 24 of the electrode assembly 20, helping reduce the risk of tearing the electrode plates on the outer periphery of the electrode assembly 20.

In embodiments where the second adhesive surface 341 is bonded to both the second region 212 and the third side surface 23, and the third adhesive surface 351 is bonded to both the third region 213 and the fourth side surface 24, the adhesive component 30 can transmit a pulling force of the housing 10 to both sides of the electrode assembly 20 along the first direction X, helping improve the uniformity of the force applied to the electrode assembly 20.

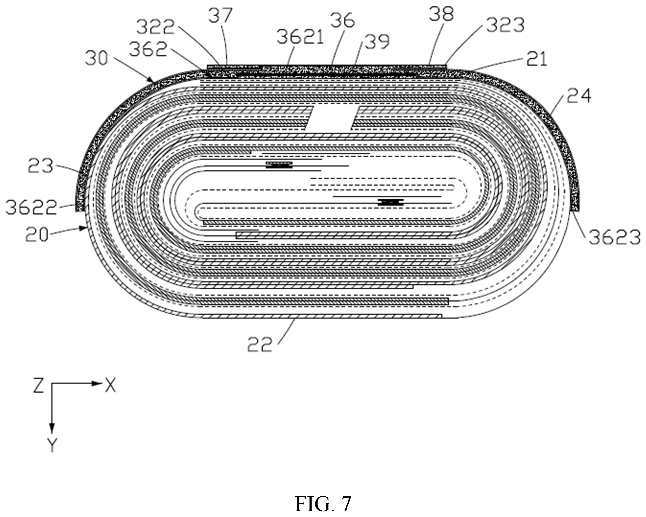

In some embodiments, referring to FIG. 7, the eighth adhesive surface 362 further includes a ninth adhesive zone 3622, where the second adhesive zone 322 is located between the ninth adhesive zone 3622 and the eighth adhesive zone 3621, and the ninth adhesive zone 3622 is bonded to the third side surface 23. This configuration enables the adhesive component 30 to transmit a pulling force of the housing 10 to the third side surface 23 of the electrode assembly 20, helping reduce the risk of tearing the electrode plates on the outer periphery of the electrode assembly 20.

In some embodiments, referring to FIG. 7, the eighth adhesive surface 362 further includes a tenth adhesive zone 3623, where the third adhesive zone 323 is located between the tenth adhesive zone 3623 and the eighth adhesive zone 3621, and the tenth adhesive zone 3623 is bonded to the fourth side surface 24. This configuration enables the adhesive component 30 to transmit a pulling force of the housing 10 to the fourth side surface 24 of the electrode assembly 20, helping reduce the risk of tearing the electrode plates on the outer periphery of the electrode assembly 20.

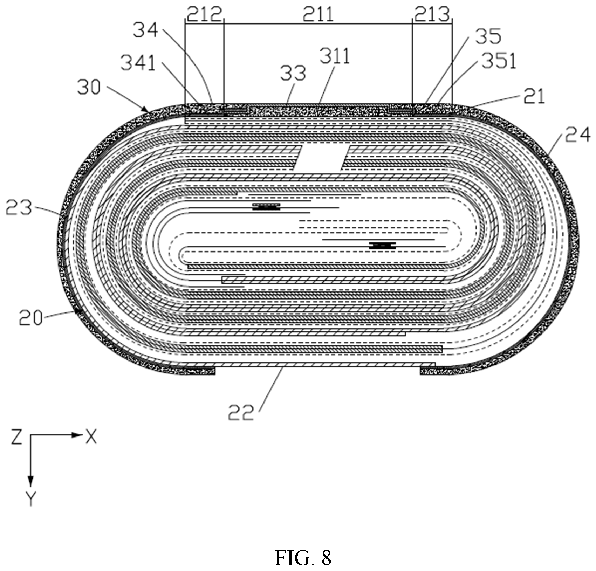

In some embodiments, referring to FIG. 8, the second adhesive surface 341 of the second single-sided adhesive 34 is further bonded to the second side surface 22. This configuration increases a bonding area between the adhesive component 30 and the electrode assembly 20, thereby helping enhance the strength of the connection between the housing 10 and the electrode assembly 20. Additionally, it can reduce a pulling force of the housing 10 on the electrode assembly 20, helping reduce the risk of tearing the electrode plates on the outer periphery of the electrode assembly 20.

In some embodiments, referring to FIG. 8, the third adhesive surface 351 of the third single-sided adhesive 35 is further bonded to the second side surface 22. This configuration increases a bonding area between the adhesive component 30 and the electrode assembly 20, thereby helping enhance the strength of the connection between the housing 10 and the electrode assembly 20. Additionally, it can reduce a pulling force of the housing 10 on the electrode assembly 20, helping reduce the risk of tearing the electrode plates on the outer periphery of the electrode assembly 20.

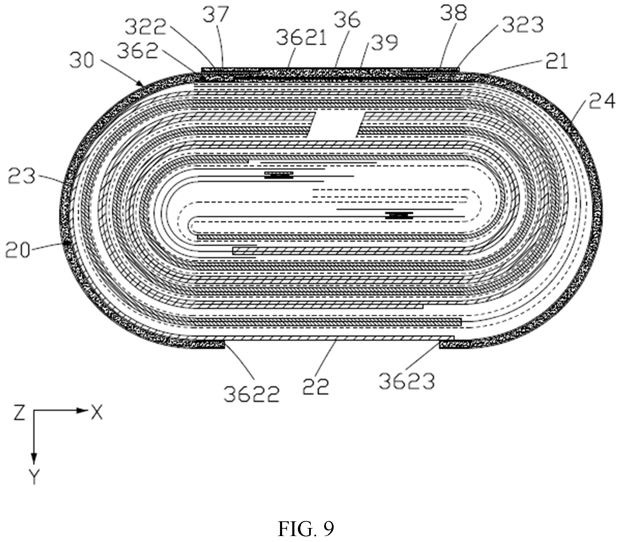

In some embodiments, referring to FIG. 9, the ninth adhesive zone 3622 is further bonded to the second side surface 22, increasing a bonding area between the adhesive component 30 and the electrode assembly 20, thereby helping enhance the strength of the connection between the housing 10 and the electrode assembly 20. Additionally, it can reduce a pulling force of the housing 10 on the electrode assembly 20, helping reduce the risk of tearing the electrode plates on the outer periphery of the electrode assembly 20.

In some embodiments, referring to FIG. 9, the tenth adhesive zone 3623 is further bonded to the second side surface 22, increasing a bonding area between the adhesive component 30 and the electrode assembly 20, thereby helping enhance the strength of the connection between the housing 10 and the electrode assembly 20. Additionally, it can reduce a pulling force of the housing 10 on the electrode assembly 20, helping reduce the risk of tearing the electrode plates on the outer periphery of the electrode assembly 20.

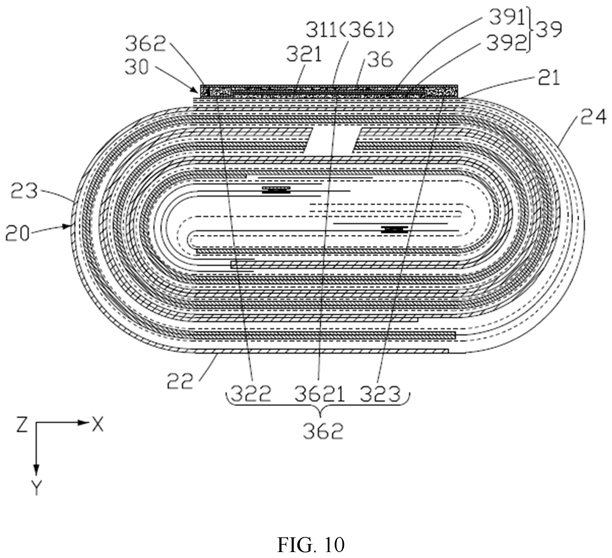

In some embodiments, referring to FIG. 10, along the second direction Y, the projection of the first adhesive zone 311 covers the first non-adhesive zone 321. This configuration helps increase an area of the first adhesive zone 311, thereby improving the strength of the connection between the adhesive component 30 and the housing 10. Further, referring to FIG. 10, along the second direction Y, the projection of the first adhesive zone 311 covers the first non-adhesive zone 321, the second adhesive zone 322, and the third adhesive zone 323.

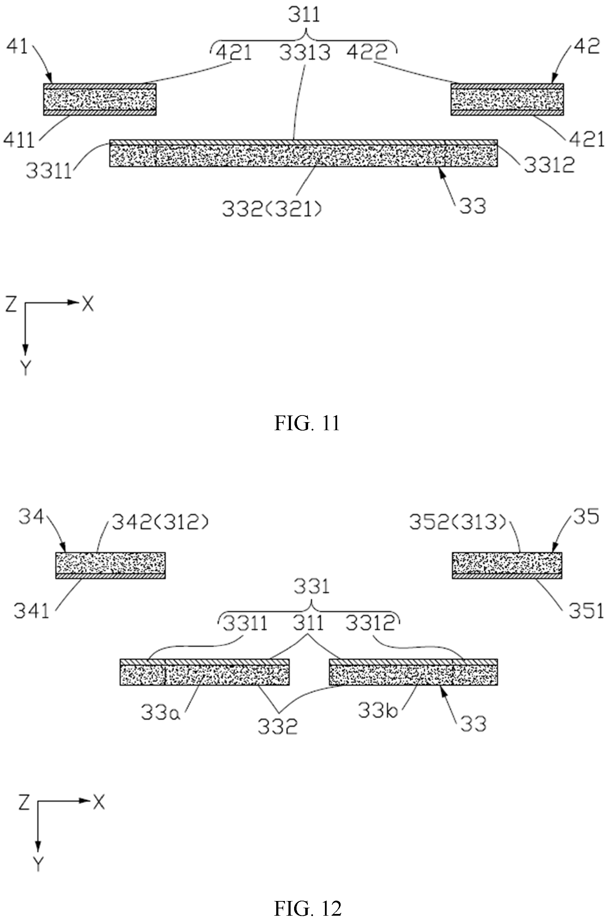

In some embodiments, referring to FIG. 11, the adhesive component 30 includes a first single-sided adhesive 33, a second double-sided adhesive 41, and a third double-sided adhesive 42, where the first single-sided adhesive 33 includes a first adhesive surface 331 and a first non-adhesive surface 332 opposite to each other, and the first adhesive surface 331 includes a fourth adhesive zone 3311, a fifth adhesive zone 3312, and an eleventh adhesive zone 3313 located between the fourth adhesive zone 3311 and the fifth adhesive zone 3312. The second double-sided adhesive 41 includes a ninth adhesive surface 411 and a tenth adhesive surface 412 opposite to each other, where the ninth adhesive surface 411 is bonded to the fourth adhesive zone 3311 and the second region 212, and the tenth adhesive surface 412 is bonded to the first sidewall 11. The third double-sided adhesive 42 includes an eleventh adhesive surface 421 and a twelfth adhesive surface 422 opposite to each other, where the eleventh adhesive surface 421 is bonded to the fifth adhesive zone 3312 and the third region 213, and the twelfth adhesive surface 422 is bonded to the first sidewall 11.

It can be understood that the eleventh adhesive zone 3313, the tenth adhesive surface 412, and the twelfth adhesive surface 422 together form the first adhesive zone 311. This configuration helps ensure that the entire first surface 31 of the adhesive component 30 is bonded to the first sidewall 11 of the housing 10, thereby helping enhance the strength of the connection between the adhesive component 30 and the housing 10.

In some embodiments, referring to FIG. 10, the adhesive component 30 includes a first double-sided adhesive 36 and a sixth single-sided adhesive 39. The first double-sided adhesive 36 includes a seventh adhesive surface 361 and an eighth adhesive surface 362 opposite to each other, where the seventh adhesive surface 361 is bonded to the first sidewall 11, and the eighth adhesive surface 362 includes the second adhesive zone 322, the third adhesive zone 323, and an eighth adhesive zone 3621 located between the second adhesive zone 322 and the third adhesive zone 323. The sixth single-sided adhesive 39 includes a sixth adhesive surface 391 and a sixth non-adhesive surface 392 opposite to each other, where the sixth adhesive surface 391 is bonded to the eighth adhesive zone 3621. This configuration, while ensuring that the entire first surface 31 of the adhesive component 30 is bonded to the first sidewall 11 of the housing 10, further reduces the amount of adhesive used, helping improve manufacturing efficiency.

In some embodiments, referring to FIG. 12, the first single-sided adhesive 33 includes a first adhesive body 33a and a second adhesive body 33b arranged separately, where the second single-sided adhesive 34 is bonded to the first adhesive body 33a, and the third single-sided adhesive 35 is bonded to the second adhesive body 33b.

It can be understood that two opposite surfaces of the first adhesive body 33a and two opposite surfaces of the second adhesive body 33b together form the first adhesive surface 331 and the first non-adhesive surface 332.

In some embodiments, the first adhesive body 33a and the second adhesive body 33b are arranged along the first direction X. In another embodiment, the first adhesive body 33a and the second adhesive body 33b are arranged along the third direction Z.

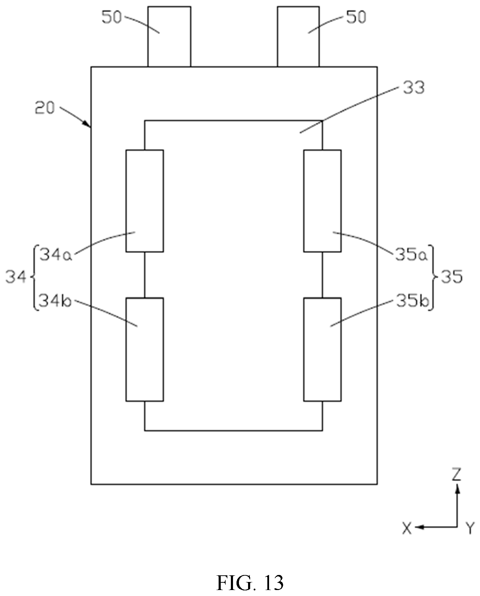

In some embodiments, referring to FIG. 13, the second single-sided adhesive 34 includes a third adhesive body 34a and a fourth adhesive body 34b arranged separately, where the third adhesive body 34a and the fourth adhesive body 34b are arranged along the third direction Z.

It can be understood that two opposite surfaces of the third adhesive body 34a and two opposite surfaces of the fourth adhesive body 34b together form the second adhesive surface 341 and the second non-adhesive surface 342.

In other embodiments, the second single-sided adhesive 34 may further include more separately arranged adhesive bodies, which are not further described herein.

In some embodiments, referring to FIG. 13, the third single-sided adhesive 35 includes a fifth adhesive body 35a and a sixth adhesive body 35b arranged separately, where the fifth adhesive body 35a and the sixth adhesive body 35b are arranged along the third direction Z.

It can be understood that two opposite surfaces of the fifth adhesive body 35a and two opposite surfaces of the sixth adhesive body 35b together form the third adhesive surface 351 and the third non-adhesive surface 352.

In other embodiments, the third single-sided adhesive 35 may further include more separately arranged adhesive bodies, which are not further described herein.

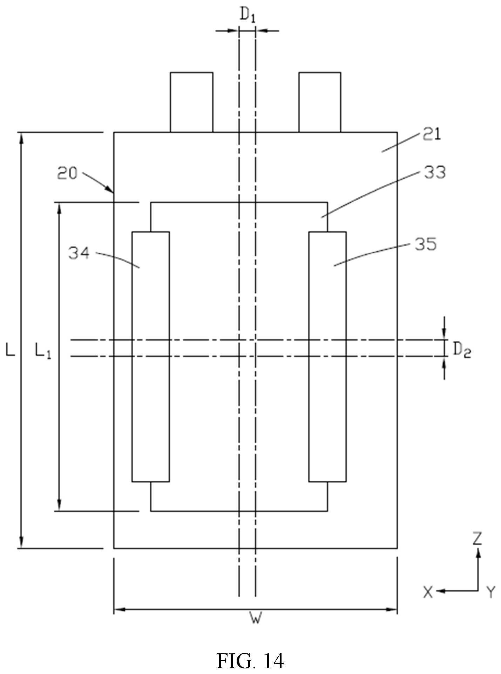

In some embodiments, referring to FIG. 14, along the first direction X, a width of the electrode assembly 20 is W, and along the third direction Z, a length of the electrode assembly 20 is L. Along the first direction X, a distance between a center of the first adhesive zone 311 and a center of the first side surface 21 is $D_1$, satisfying: $D_1 \leq 0.1W$. This configuration helps make a force applied to the electrode assembly 20 more uniform, reducing the risk of damage to the electrode plates on the outer periphery of the electrode assembly 20.

In some embodiments, referring to FIG. 14, along the third direction Z, a distance between a center of the first adhesive zone 311 and a center of the first side surface 21 is $D_2$, satisfying: $D_2 \leq 0.1L$. This configuration helps make a force applied to the electrode assembly 20 more uniform, reducing the risk of damage to the electrode plates on the outer periphery of the electrode assembly 20.

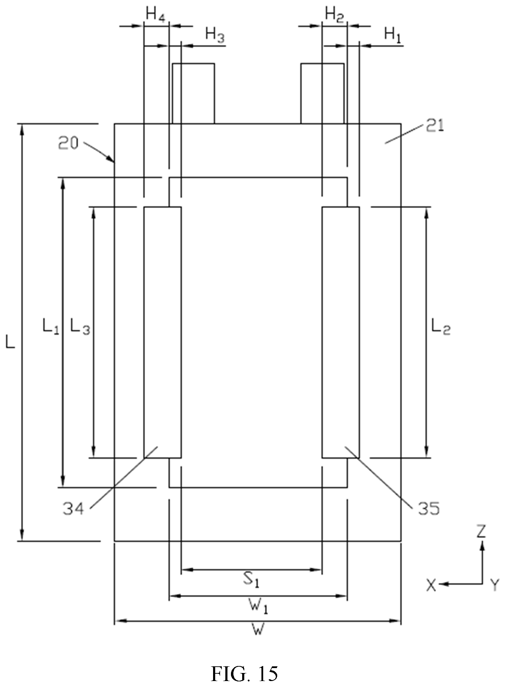

In some embodiments, referring to FIG. 15, along the first direction X, a width of the first adhesive zone 311 is $S_1$, satisfying: $0.1W \leq S_1 \leq 0.85W$. This configuration helps reduce the risk of movement of the electrode assembly 20.

In some embodiments, referring to FIG. 15, along the third direction Z, a length of the first adhesive zone 311 is $L_1$, satisfying: $0.3L \leq L_1 \leq 0.9L$. This configuration helps reduce the risk of movement of the electrode assembly 20.

In some embodiments, referring to FIG. 15, along the first direction X, a width of the first non-adhesive zone 321 is $W_1$, satisfying: $0.3W \leq W_1 \leq 0.85W$. This configuration helps better buffer a pulling force of the housing 10 on the electrode assembly 20, reducing the risk of damage to the electrode plates on the outer periphery of the electrode assembly 20.

In some embodiments, referring to FIG. 15, along the third direction Z, a length of the first non-adhesive zone 321 is $l_1$, satisfying: $0.3L \leq l_1 \leq 0.9L$.

In some embodiments, referring to FIG. 15, along the first direction X, a width of bonding between the second adhesive zone 322 and the second region 212 is $H_1$, satisfying $H_1 \geq 0.05W$. This configuration helps reduce the risk of movement of the electrode assembly 20. In some embodiments, $H_1 \leq 0.3W$.

In some embodiments, referring to FIG. 15, along the first direction X, a distance between the second adhesive zone 322 and the first adhesive zone 311 is $H_2$, satisfying $H_2 \geq 0.05W_1$. This configuration helps better buffer a pulling force of the housing 10 on the electrode assembly 20, reducing the risk of damage to the electrode plates on the outer periphery of the electrode assembly 20. In some embodiments, $H_2 \leq 0.4W_1$.

In some embodiments, referring to FIG. 15, along the first direction X, a distance between the third adhesive zone 323 and the first adhesive zone 311 is $H_3$, satisfying $H_3 \geq 0.05W_1$. This configuration helps better buffer a pulling force of the housing 10 on the electrode assembly 20, reducing the risk of damage to the electrode plates on the outer periphery of the electrode assembly 20. In some embodiments, $H_3 \leq 0.4W_1$.

In some embodiments, referring to FIG. 15, along the first direction X, a width of bonding between the third adhesive zone 323 and the third region 213 is $H_4$, satisfying $H_4 \geq 0.05W$. This configuration helps reduce the risk of movement of the electrode assembly 20. In some embodiments, $H_4 \leq 0.3W$.

In some embodiments, referring to FIG. 15, along the third direction Z, a length of the second adhesive zone 322 is $L_2$, satisfying $L_2 \geq 0.4L_1$. This configuration helps reduce the risk of movement of the electrode assembly 20.

In some embodiments, referring to FIG. 15, along the third direction Z, a length of the third adhesive zone 323 is $L_3$, satisfying $L_3 \geq 0.4L_1$. This configuration helps reduce the risk of movement of the electrode assembly 20.

To verify the impact of each adhesive zone and non-adhesive zone of the adhesive component 30 on the electrochemical apparatus 100, the following tests were conducted using a lithium-ion pouch battery as an example:

A lithium-ion pouch battery with a rectangular maximum projection surface was selected, where a wound electrode assembly 20 inside the lithium-ion pouch battery has a length L of 87 mm, a width W of 64 mm, and a thickness of 4.8 mm.

In Examples 1-21, the adhesive component 30 includes a first single-sided adhesive 33, a second single-sided adhesive 34, and a third single-sided adhesive 35, where a center of the first single-sided adhesive 33 coincides with a center of a first side surface of the electrode assembly 20. Dimensional parameters of the adhesive component 30 are shown in Table 1 below. In Example 7, the second single-sided adhesive 34 and the third single-sided adhesive 35 are respectively bonded to a third side surface 23 and a fourth side surface 24 of the electrode assembly 20. In Examples 8-12, the second single-sided adhesive 34 and the third single-sided adhesive 35 are further bonded to a second side surface 22 of the electrode assembly 20.

Example 22 differs from Example 1 in that the adhesive component 30 includes a first double-sided adhesive 36 and a sixth single-sided adhesive 39, where the first double-sided adhesive 36 has a length of 50 mm and a width of 52 mm, the sixth single-sided adhesive 39 has a length of 50 mm and a width of 42 mm.

In the comparative example, a first double-sided adhesive 36 with a length of 50 mm and a width of 42 mm was used to bond the electrode assembly 20 to the housing 10, which is an aluminum-plastic film.

For each group, 20 batteries were taken for a drop pass rate comparison test. The batteries were tested in a drop sequence of six faces and four corners, with a drop height of 1.8 m. After the drop, it was observed whether the housing 10 was breached or leaked, and a number of batteries with a breached or leaking housing 10 was counted. If the housing 10 was neither breached nor leaked, the lithium-ion pouch battery was disassembled to observe whether electrode plates on an outer periphery of the electrode assembly 20 were torn or damaged, and a number of batteries with torn or damaged electrode plates on the outer periphery was counted. A battery was deemed to have passed the test if the housing 10 was neither breached nor leaked and the electrode plates on the outer periphery were neither torn nor damaged; otherwise, it was deemed to have failed the test. Pass rate = number of passes / 20 $\times$ 100%.

**Table 1 Test results of dimensional variations of first single-sided adhesive 33, second single-sided adhesive 34, and third single-sided adhesive 35, and structural change of adhesive component 30**

| Group | Length of first single-sided adhesive 33 or first double-sided adhesive 36 (mm) | Width of first single-sided adhesive 33 or first double-sided adhesive 36 (mm) | $L_2$ or $L_3$ (mm) | Number of second single-sided adhesive 34 or third single-sided adhesive 35 | $H_2$ or $H_3$ (mm) | $H_2/W_1$ or $H_3/W_1$ | Bonding length of one side of adhesive component 30 with electrode assembly 20 (mm) | $H_1/W$ or $H_4/W$ | $S_1$ | $S_1/W_1$ | $S_1/W$ | Number of housing 10 breaches or leaks | Number of torn or damaged electrode plates on outer periphery | Pass rate (%) |
|---|---|---|---|---|---|---|---|---|---|---|---|---|---|---|
| Comparative example | 50 | 42 | / | / | / | | / | | | | | 1 | 4 | 75 |
| Example 1 | 50 (0.57L) | 42 (0.66W) | 50 | 1 | 5 | 0.12 | 5 | 0.08 | 32 | 0.76 | 0.50 | 0 | 0 | 100 |
| Example 2 | 50 | 42 | 50 | 1 | 8 | 0.19 | 5 | 0.08 | 26 | 0.62 | 0.41 | 0 | 0 | 100 |
| Example 3 | 50 | 42 | 50 | 1 | 11 | 0.26 | 5 | 0.08 | 20 | 0.48 | 0.31 | 0 | 0 | 100 |
| Example 4 | 50 | 42 | 50 | 1 | 14 | 0.33 | 5 | 0.08 | 14 | 0.33 | 0.22 | 0 | 0 | 100 |
| Example 5 | 50 | 42 | 50 | 1 | 17 | 0.40 | 5 | 0.08 | 8 | 0.19 | 0.13 | 2 | 0 | 90 |
| Example 6 | 50 | 42 | 50 | 1 | 5 | 0.12 | 10 | 0.16 | 32 | 0.76 | 0.50 | 0 | 0 | 100 |
| Example 7 | 50 | 42 | 50 | 1 | 5 | 0.12 | 15 | 0.17 | 32 | 0.76 | 0.50 | 0 | 0 | 100 |
| Example 8 | 50 | 42 | 50 | 1 | 5 | 0.12 | 20 | 0.17 | 32 | 0.76 | 0.50 | 0 | 0 | 100 |
| Example 9 | 50 | 42 | 50 | 1 | 5 | 0.12 | 25 | 0.17 | 32 | 0.76 | 0.50 | 0 | 0 | 100 |
| Example 10 | 50 | 42 | 50 | 1 | 5 | 0.12 | 30 | 0.17 | 32 | 0.76 | 0.50 | 0 | 0 | 100 |
| Example 11 | 50 | 42 | 50 | 1 | 5 | 0.12 | 35 | 0.17 | 32 | 0.76 | 0.50 | 0 | 0 | 100 |
| Example 12 | 50 | 42 | 50 | 1 | 5 | 0.12 | 40 | 0.17 | 32 | 0.76 | 0.50 | 0 | 0 | 100 |
| Example 13 | 50 | 42 | 48 | 2 | 5 | 0.12 | 5 | 0.08 | 32 | 0.76 | 0.50 | 0 | 0 | 100 |
| Example 14 | 50 | 42 | 46 | 3 | 5 | 0.12 | 5 | 0.08 | 32 | 0.76 | 0.50 | 0 | 0 | 100 |
| Example 15 | 30 (0.34L) | 42 | 30 | 1 | 5 | 0.12 | 10 | 0.16 | 32 | 0.76 | 0.50 | 2 | 0 | 90 |
| Example 16 | 40 (0.46L) | 42 | 40 | 1 | 5 | 0.12 | 10 | 0.16 | 32 | 0.76 | 0.50 | 0 | 0 | 100 |
| Example 17 | 60 (0.69L) | 42 | 60 | 1 | 5 | 0.12 | 10 | 0.16 | 32 | 0.76 | 0.50 | 0 | 0 | 100 |
| Example 18 | 70 (0.80L) | 42 | 70 | 1 | 5 | 0.12 | 10 | 0.16 | 32 | 0.76 | 0.50 | 0 | 0 | 100 |
| Example 19 | 50 | 22 (0.34W) | 50 | 1 | 5 | 0.23 | 5 | 0.08 | 12 | 0.55 | 0.19 | 1 | 0 | 95 |
| Example 20 | 50 | 32 (0.50W) | 50 | 1 | 5 | 0.16 | 5 | 0.08 | 22 | 0.69 | 0.34 | 0 | 0 | 100 |
| Example 21 | 50 | 52 (0.81W) | 50 | 1 | 5 | 0.10 | 5 | 0.08 | 42 | 0.81 | 0.66 | 0 | 0 | 95 |
| Example 22 | 50 | 52 | 50 | 1 | 0 | 0 | 5 | 0.08 | 52 | 1.24 | 0.81 | 0 | 2 | 90 |

From a comparison of the examples and the comparative example in Table 1, it can be seen that the adhesive component 30 in the embodiments of the present application, by eliminating bonding to the first region 211 and bonding the electrode assembly 20 to the adhesive component 30 through the second region 212 and the third region 213, suppresses movement of the electrode assembly 20 during a battery drop while allowing a pulling force of the housing 10 to be buffered through the first non-adhesive zone 321 and then transmitted to the electrode assembly 20 through the second adhesive zone 322 and the third adhesive zone 323. This helps reduce the risk of tearing the electrode plates on the outer periphery of the electrode assembly 20 during a battery drop, significantly increasing the pass rate of drop tests and enhancing the use safety of the battery. Additionally, from a comparison of Example 1 and Example 22, it can be seen that a bonding segment of the second single-sided adhesive 34 with the first single-sided adhesive 33 and a bonding segment of the third single-sided adhesive 35 with the first single-sided adhesive 33 can further buffer a pulling force of the housing 10 through deformation, thereby further reducing the risk of tearing the electrode plates on the outer periphery of the electrode assembly 20.

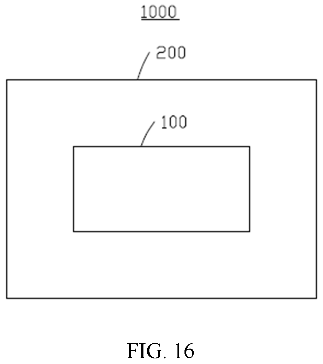

Referring to FIG. 16, embodiments of the present application further provide an electrical device 1000, where the electrical device 1000 includes the electrochemical apparatus 100 described above.

In some embodiments, referring to FIG. 16, the electrical device 1000 further includes a device body 200, where the electrochemical apparatus 100 is mounted in the device body 200 to supply power to the device body 200.

In some embodiments, the electrical device 1000 may be a Bluetooth headset, Bluetooth speaker, mobile phone, laptop computer, tablet computer, e-book reader, electric toy, gaming console, camcorder, portable recorder, radio, smartwatch, lighting device, calculator, or the like, which are not listed exhaustively herein.

Since the electrical device 1000 adopts the technical solutions of any embodiments of the electrochemical apparatus 100 described above, it has at least the beneficial effects brought by the technical solutions of any embodiments of the electrochemical apparatus 100, which are not repeated herein.

In addition, those of ordinary skill in the art should recognize that the above embodiments are only used to illustrate the present application and are not intended to limit the present application. Appropriate changes and variations made to the above embodiments within the essential scope of the present application fall within the scope disclosed by the present application.

**Claims**

1. An electrochemical apparatus, **characterized in that**, comprising:

   a housing, the housing comprises a first sidewall;
   an electrode assembly, the electrode assembly being disposed within the housing, the electrode assembly comprises a first side surface adjacent to the first sidewall, and the first side surface comprises a first region, a second region, and a third region, wherein along a first direction, the first region is located between the second region and the third region; and
   an adhesive component, the adhesive component being located between the housing and the electrode assembly, the adhesive component comprises a first surface and a second surface opposite to each other, the first surface being adjacent to the housing, the second surface facing away from the housing; the first surface comprises a first adhesive zone bonded to the first sidewall; and the second surface comprises a second adhesive zone bonded to the second region, a third adhesive zone bonded to the third region, and a first non-adhesive zone located between the second adhesive zone and the third adhesive zone; wherein
   along a second direction, a projection of the first adhesive zone overlaps with the first non-adhesive zone, the second direction being a direction in which the first sidewall is opposite to the first side surface.

2. The electrochemical apparatus according to claim 1, **characterized in that**, the first surface further comprises a second non-adhesive zone and a third non-adhesive zone, wherein along the first direction, the first adhesive zone is located between the second non-adhesive zone and the third non-adhesive zone; along the second direction, a projection of the second non-adhesive zone overlaps with the second adhesive zone, and a projection of the third non-adhesive zone overlaps with the third adhesive zone.

3. The electrochemical apparatus according to claim 2, **characterized in that**, the electrochemical apparatus satisfies any one of the following conditions:

   (1) the adhesive component comprises a first single-sided adhesive, a second single-sided adhesive, and a third single-sided adhesive, the first single-sided adhesive comprises a first adhesive surface and a first non-adhesive surface opposite to each other, the first adhesive surface comprises a fourth adhesive zone, a fifth adhesive zone, and the first adhesive zone located between the fourth adhesive zone and the fifth adhesive zone; wherein

the second single-sided adhesive comprises a second adhesive surface and a second non-adhesive surface opposite to each other, the second adhesive surface being bonded to the fourth adhesive zone and the second region; and
the third single-sided adhesive comprises a third adhesive surface and a third non-adhesive surface opposite to each other, the third adhesive surface being bonded to the fifth adhesive zone and the third region; or

(2) the adhesive component comprises a first double-sided adhesive, a fourth single-sided adhesive, a fifth single-sided adhesive, and a sixth single-sided adhesive; wherein

the first double-sided adhesive comprises a seventh adhesive surface and an eighth adhesive surface opposite to each other; the seventh adhesive surface comprises a sixth adhesive zone, a seventh adhesive zone, and the first adhesive zone located between the sixth adhesive zone and the seventh adhesive zone; and the eighth adhesive surface comprises the second adhesive zone, the third adhesive zone, and an eighth adhesive zone located between the second adhesive zone and the third adhesive zone; and
the fourth single-sided adhesive comprises a fourth adhesive surface and a fourth non-adhesive surface opposite to each other, the fourth adhesive surface being bonded to the sixth adhesive zone; the fifth single-sided adhesive comprises a fifth adhesive surface and a fifth non-adhesive surface opposite to each other, the fifth adhesive surface being bonded to the seventh adhesive zone; and the sixth single-sided adhesive comprises a sixth adhesive surface and a sixth non-adhesive surface opposite to each other, the sixth adhesive surface being bonded to the eighth adhesive zone.

4. The electrochemical apparatus according to claim 3, **characterized in that**, the adhesive component satisfies at least one of the following conditions:

(1) the first single-sided adhesive comprises a first adhesive body and a second adhesive body arranged separately, the second single-sided adhesive being bonded to the first adhesive body, and the third single-sided adhesive being bonded to the second adhesive body;
(2) the second single-sided adhesive comprises a third adhesive body and a fourth adhesive body arranged separately, the third adhesive body and the fourth adhesive body being arranged along a third direction, and any two of the third direction, the first direction and the second direction are perpendicular to each other; or
(3) the third single-sided adhesive comprises a fifth adhesive body and a sixth adhesive body arranged separately, the fifth adhesive body and the sixth adhesive body being arranged along a third direction, and any two of the third direction, the first direction and the second direction are perpendicular to each other.

5. The electrochemical apparatus according to claim 3, **characterized in that**, the electrode assembly further comprises a second side surface, a third side surface, and a fourth side surface, the second side surface being disposed opposite to the first side surface along the second direction, and the third side surface being disposed opposite to the fourth side surface along the first direction, satisfying at least one of the following conditions:

(1) the second single-sided adhesive is bonded to both the second region and the third side surface;
(2) the third single-sided adhesive is bonded to both the third region and the fourth side surface;
(3) the eighth adhesive surface further comprises a ninth adhesive zone, the second adhesive zone being located between the ninth adhesive zone and the eighth adhesive zone, and the ninth adhesive zone being bonded to the third side surface; or
(4) the eighth adhesive surface further comprises a tenth adhesive zone, the third adhesive zone being located between the tenth adhesive zone and the eighth adhesive zone, and the tenth adhesive zone being bonded to the fourth side surface.

6. The electrochemical apparatus according to claim 5, **characterized in that**, at least one of the following conditions is satisfied:

(1) the second single-sided adhesive is further bonded to the second side surface;
(2) the third single-sided adhesive is further bonded to the second side surface;
(3) the ninth adhesive zone is further bonded to the second side surface; or
(4) the tenth adhesive zone is further bonded to the second side surface.

7. The electrochemical apparatus according to claim 2, **characterized in that**, along the second direction, the first non-adhesive zone covers the projection of the first adhesive zone, the projection of the second non-adhesive zone covers the second adhesive zone, and the projection of the third non-adhesive zone covers the third adhesive zone.

8. The electrochemical apparatus according to claim 1, **characterized in that**, along the second direction, the projection of the first adhesive zone covers the first non-adhesive zone.

9. The electrochemical apparatus according to claim 8, **characterized in that**, the electrochemical apparatus satisfies any one of the following conditions:

   (1) the adhesive component comprises a first single-sided adhesive, a second double-sided adhesive, and a third double-sided adhesive, the first single-sided adhesive comprising a first adhesive surface and a first non-adhesive surface opposite to each other, and the first adhesive surface comprising a fourth adhesive zone, a fifth adhesive zone, and an eleventh adhesive zone located between the fourth adhesive zone and the fifth adhesive zone; wherein

   the second double-sided adhesive comprises a ninth adhesive surface and a tenth adhesive surface opposite to each other, the ninth adhesive surface being bonded to the fourth adhesive zone and the second region; and
   the third double-sided adhesive comprises an eleventh adhesive surface and a twelfth adhesive surface opposite to each other, the eleventh adhesive surface being bonded to the fifth adhesive zone and the third region; or

   (2) the adhesive component comprises a first double-sided adhesive and a sixth single-sided adhesive; wherein

   the first double-sided adhesive comprises a seventh adhesive surface and an eighth adhesive surface opposite to each other; the seventh adhesive surface is bonded to the first sidewall; and the eighth adhesive surface comprises the second adhesive zone, the third adhesive zone, and an eighth adhesive zone located between the second adhesive zone and the third adhesive zone; and
   the sixth single-sided adhesive comprises a sixth adhesive surface and a sixth non-adhesive surface opposite to each other, the sixth adhesive surface being bonded to the eighth adhesive zone.

10. The electrochemical apparatus according to claim 9, **characterized in that**, the adhesive component satisfies at least one of the following conditions:

    (1) the first single-sided adhesive comprises a first adhesive body and a second adhesive body arranged separately, the second double-sided adhesive being bonded to the first adhesive body, and the third double-sided adhesive being bonded to the second adhesive body;
    (2) the second double-sided adhesive comprises a third adhesive body and a fourth adhesive body arranged separately, the third adhesive body and the fourth adhesive body being arranged along a third direction, and any two of the third direction, the first direction and the second direction are perpendicular to each other; or
    (3) the third double-sided adhesive comprises a fifth adhesive body and a sixth adhesive body arranged separately, the fifth adhesive body and the sixth adhesive body being arranged along a third direction, and any two of the third direction, the first direction and the second direction are perpendicular to each other.

11. The electrochemical apparatus according to any one of claims 1 to 10, **characterized in that**, along the first direction, a width of the electrode assembly is W, and along the third direction, a length of the electrode assembly is L, wherein any two of the third direction, the first direction and the second direction are perpendicular to each other, satisfying at least one of the following conditions:

    (1) along the first direction, a distance between a center of the first adhesive zone and a center of the first side surface is $D_1$, satisfying: $D_1 \leq 0.1W$;
    (2) along the third direction, a distance between a center of the first adhesive zone and a center of the first side surface is $D_2$, satisfying: $D_2 \leq 0.1L$;
    (3) along the first direction, a width of the first adhesive zone is $S_1$, satisfying: $0.1W \leq S_1 \leq 0.85W$;
    (4) along the third direction, a length of the first adhesive zone is $L_1$, satisfying: $0.3L \leq L_1 \leq 0.9L$;
    (5) along the first direction, a width of the first non-adhesive zone is $W_1$, satisfying: $0.3W \leq W_1 \leq 0.85W$; or
    (6) along the third direction, a length of the first non-adhesive zone is $I_1$, satisfying: $0.3L \leq I_1 \leq 0.9L$.

**12.** The electrochemical apparatus according to claim 11, **characterized in that**, along the first direction, a width of bonding between the second adhesive zone and the second region is $H_1$, a distance between the second adhesive zone and the first adhesive zone is $H_2$, a distance between the third adhesive zone and the first adhesive zone is $H_3$, and a width of bonding between the third adhesive zone and the third region is $H_4$; and along the third direction, a length of the second adhesive zone is $L_2$, and a length of the third adhesive zone is $L_3$, the electrochemical apparatus satisfying at least one of the following conditions:

$$(1)\ H_1 \geq 0.05W;$$

$$(2)\ H_1 \leq 0.3W;$$

$$(3)\ H_4 \geq 0.05W;$$

$$(4)\ H_4 \leq 0.3W;$$

$$(5)\ H_2 \geq 0.05W_1;$$

$$(6)\ H_2 \leq 0.4W_1;$$

$$(7)\ H_3 \geq 0.05W_1;$$

$$(8)\ H_3 \leq 0.4W_1;$$

$$(9)\ L_2 \geq 0.4L_1;$$

or

$$(10)\ L_3 \geq 0.4L_1.$$

**13.** An electrical device, **characterized in that**, comprising the electrochemical apparatus according to any one of claims 1 to 12.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

International application No.

**PCT/CN2023/135987**

### A. CLASSIFICATION OF SUBJECT MATTER

H01M10/0525(2010.01)i; H01M10/04(2006.01)i; H01M10/42(2006.01)i

According to International Patent Classification (IPC) or to both national classification and IPC

### B. FIELDS SEARCHED

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNABS, CNTXT, ENTXTC, VEN, WPABSC, CNKI, ISI_Web of Science: 壳体, 侧壁, 电极, 第一, 第二, 粘接, 粘结, 粘合, 胶带, 双面胶, 窜动, 蹿动, 跌落, 掉落, 撕裂, 撕扯, adhesion, adhesive, casing, electrode, first, second, shell, tearing damage

### C. DOCUMENTS CONSIDERED TO BE RELEVANT

| Category* | Citation of document, with indication, where appropriate, of the relevant passages | Relevant to claim No. |
|---|---|---|
| X | CN 113782805 A (NINGDE AMPEREX TECHNOLOGY LTD.) 10 December 2021 (2021-12-10)<br>description, paragraphs 5-31, 49-61, and 80-82, and embodiments 1 and 4, and figures 2-7 | 1-13 |
| X | US 2023238565 A1 (NINGDE AMPEREX TECHNOLOGY LTD.) 27 July 2023 (2023-07-27)<br>description, paragraphs 50-61, and figures 2-7 | 1-13 |
| A | CN 113939952 A (NINGDE AMPEREX TECHNOLOGY LTD.) 14 January 2022 (2022-01-14)<br>entire description | 1-13 |
| A | CN 114270621 A (NINGDE AMPEREX TECHNOLOGY LTD.) 01 April 2022 (2022-04-01)<br>entire description | 1-13 |
| A | CN 114270622 A (NINGDE AMPEREX TECHNOLOGY LTD.) 01 April 2022 (2022-04-01)<br>entire description | 1-13 |
| A | CN 114730961 A (NINGDE AMPEREX TECHNOLOGY LTD.) 08 July 2022 (2022-07-08)<br>entire description | 1-13 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **24 July 2024** | **31 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/135987** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115621654 A (NINGDE AMPEREX TECHNOLOGY LTD.) 17 January 2023 (2023-01-17)<br>      entire description | 1-13 |

Form PCT/ISA/210 (second sheet) (July 2022)

## INTERNATIONAL SEARCH REPORT
### Information on patent family members

International application No.

**PCT/CN2023/135987**

| Patent document cited in search report | | | Publication date (day/month/year) | Patent family member(s) | | | Publication date (day/month/year) |
|---|---|---|---|---|---|---|---|
| CN | 113782805 | A | 10 December 2021 | None | | | |
| US | 2023238565 | A1 | 27 July 2023 | WO | 2023024838 | A1 | 02 March 2023 |
| | | | | EP | 4207412 | A1 | 05 July 2023 |
| CN | 113939952 | A | 14 January 2022 | None | | | |
| CN | 114270621 | A | 01 April 2022 | None | | | |
| CN | 114270622 | A | 01 April 2022 | None | | | |
| CN | 114730961 | A | 08 July 2022 | None | | | |
| CN | 115621654 | A | 17 January 2023 | None | | | |

Form PCT/ISA/210 (patent family annex) (July 2022)